# EUROPEAN PATENT SPECIFICATION

(11) **EP 2 690 189 B1**
(45) Date of publication and mention of the grant of the patent: **06.05.2020**
(21) Application number: 12762787.5
(22) Date of filing: 23.03.2012
(51) Int. Cl.: C22C 38/00, B26F 1/40, B26F 1/44, C21D 9/00, C21D 9/46, C22C 38/58, B23P 15/28, B23P 15/40, C21D 3/04, C22C 38/02, C22C 38/26, C22C 38/04

(54) **STEEL PLATE WITH EXCELLENT DURABILITY FOR BAND-SHAPED DIE-CUTTING BLADE, AND BAND-SHAPED DIE-CUTTING BLADE**
STAHLPLATTE MIT AUSGEZEICHNETER HALTBARKEIT FÜR EINE BANDFÖRMIGE STANZKLINGE UND BANDFÖRMIGE STANZKLINGE
PLAQUE D'ACIER PRÉSENTANT UNE EXCELLENTE DURABILITÉ POUR LAME DE DÉCOUPAGE À LA PRESSE EN FORME DE BANDE ET LAME DE DÉCOUPAGE À LA PRESSE EN FORME DE BANDE

(30) Priority: 25.03.2011 JP 2011068990
(43) Date of publication of application: 29.01.2014
(73) Proprietor: NIPPON STEEL NISSHIN CO., LTD., Chiyoda-ku Tokyo 100-8366 (JP)
(72) Inventor: KODAMA, Shinichi, Kure-shi Hiroshima 737-0027 (JP); KUBO, Hironori, Kure-shi Hiroshima 737-0027 (JP); TAGASHIRA, Satoshi, Kure-shi Hiroshima 737-0027 (JP); FUJIHARA, Masaru, Kure-shi Hiroshima 737-0027 (JP)
(74) Representative: Carstens, Dirk Wilhelm
(86) International application number: PCT/JP2012/057631
(87) International publication number: WO 2012/133244

(56) References cited:
- JP-A- 5 239 590
- JP-A- 10 130 782
- JP-A- 52 135 487
- JP-A- 60 159 120
- JP-A- 2004 277 801
- JP-A- 2005 336 567
- JP-A- 2009 215 571
- JP-A- 2010 138 453

## Description

### Technical Field

The present invention relates to a steel plate for use for band-shaped die-cutting blades for cutting cardboards, paperboards, resin sheets, leathers and the like, and to such a band-shaped die-cutting blade.

### Background Art

The above-mentioned band-shaped die-cutting blade is also referred to as a term of Thomson blade, rule, die or the like, and is so designed as to have a tapered blade edge formed on one side edge of a band-shaped thin plate of a steel material. When such a band-shaped die-cutting blade is used, a plywood plate or the like is previously processed with a laser or the like to form thereon a groove having a predetermined cutting form, and the other side edge not having the blade edge of the band-shaped die-cutting blade is inlaid into the groove to produce a cutting die referred to as "a die mold". In this case, the band-shaped die-cutting blade is bent in a predetermined form so as to be inlaid into the groove. The depth of the groove is smaller than the width of the band-shaped die-cutting blade, and therefore the blade chip protrudes from the surface of the plywood plate and an elastic block that is a little thicker than the protruding height of the blade chip is stuck to the periphery of the blade . With that, the material to be cut is pressed against the die mold and cut whereby the piece that has been cut in a predetermined shape is pushed back owing to the repulsive force of the elastic block and can be taken out with ease.

The band-shaped die-cutting blade is required to satisfy the characteristic of capable of being readily bent in a small bending radius in producing the die mold, or that is, required to be excellent in "bendability", in addition to the requirement thereof that is excellent in "sharpness" and "durability" as a cutting knife.

Heretofore, in general, it is said that for realizing excellent "sharpness" the blade edge must be hard and the whole extent of the sharpened part must be highly rigid, and for securing "durability", it is said that abrasion resistance of the blade edge and therearound must be high. Consequently, there have been employed a method of providing a hard metallographic structure that comprises mainly bainite or tempered martensite through thermal refining treatment (isothermal transformation treatment, quenching/tempering treatment), and a method of more remarkably hardening the blade edge through induction hardening treatment.

On the other hand, for securing "bendability", there has been employed a method of decarburizing the surface layer part of a steel plate to thereby form a surface layer having a reduced C content (decarburized surface layer). The decarburized surface layer still maintains the structure condition of a ferrite single phase even after the material has been subjected to thermal refining treatment such as quenching/tempering or the like treatment, and owing to the decarburized surface layer, the steel plate can be prevented from being cracked when bent in a predetermined shape.

As the steel type capable of being hardened through such thermal refining treatment, or capable of being noticeably hardened at the blade edge through induction hardening treatment, or capable of being processed to form the decarburized surface layer thereon, for example, there may be mentioned S55C, SAE1050, SAE1055 and the like defined in Japanese Industrial Standard, JIS. Steels of those types can be given a hardness of at least 280 HV or even at least 300 HV and a suitable degree of toughness through isothermal transformation or tempering, and can further be given a hardness of at least 500 HV through induction hardening at blade edges. In addition, the decarburized surface layer can be formed through heat treatment in a suitably controlled atmosphere.

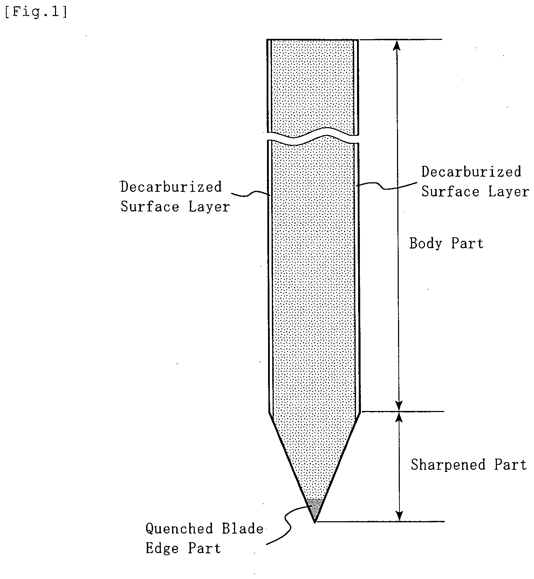

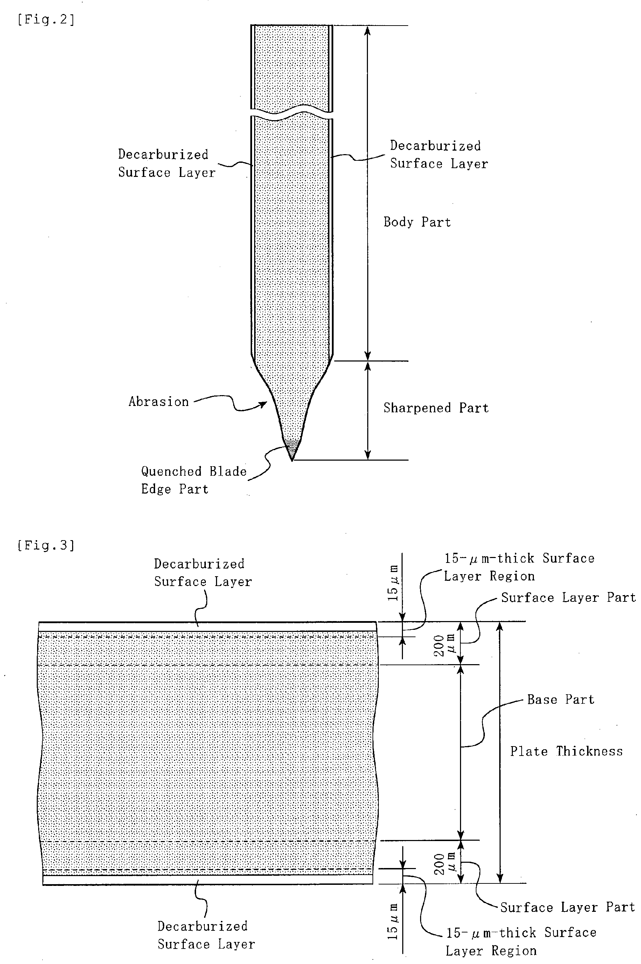

Fig. 1 schematically shows the cross-section structure of an already-existing ordinary band-shaped die-cutting blade of which the bendability has been improved by forming a decarburized surface layer thereon. The thickness of the decarburized surface layer is overdrawn (the same shall apply also to the Fig. 2 to be mentioned below) . The unworked steel plate is processed for decarburization annealing and thermal refining treatment, and the decarburized surface layer around the surface of the plate has a soft ferrite single-phase structure while the other part has a tough structure comprising mainly bainite or tempered martensite. The band-shaped material has a sharpened part having a tapered form at the side edge thereof and the other part thereof is a body part. At the blade edge, there may be formed "a quenched blade edge part" through induction hardening treatment. In this case, the hardness of the blade edge can be controlled to be at least 500 HV.

Recently for the reason of environmental concerns, cardboard is being used as a packaging/cushioning material in place of foamed polystyrene for home appliances and others, and the design of packages is being improved. Further, it has become possible to rapidly and easily design cushioning materials by computer. Consequently, it has become necessary to cut and work a large variety of and much complicated shapes than ever before, and band-shaped die-cutting blades have become used for much severer bending operation. In such a case, a band-shaped die-cutting blade having a decarburized surface layer formed thereon suffers from a problem in that the sharpened part thereof is cracked rather than the body part thereof. The sharpened part of the blade does not have a decarburized surface layer, and therefore in use for severe bending operation, the "bendability" of the sharpened part thereof is important.

JP 2004 277 801 A1, which was used for drafting the preamble of claim 1, describes a steel sheet for band-shaped die-cutting blades. The steel sheet has a decarburized surface layer with a thickness of 5 µm or thicker comprising a ferrite single phase structure, formed on both surfaces, and a base part, which is a region of a depth of 100 µm or deeper from the surface, which has a chemical composition comprising 0.40-0.80% C, preferably further comprising 0.5% or less Si, 0.2-2.0% Mn, 0.02% or less P, 0.02% or less S, 1.0% or less Cr and the balance Fe with unavoidable impurities. The base part has a metallurgical structure containing 1 vol.% or more spheroidal carbides dispersed in bainite or tempered martensite and has a hardness adjusted to 300 to 450 HV.

JP 2004 277 801 A1 further describes a technique of providing a structure that contains a given amount of a spherical carbide to thereby enhance the "bendability" of the blade edge part while securing the "durability" of the blade.

### Summary of Invention

### Technical Problem

According to the technique of JP 2004 277 801 A1, it has become possible to provide a band-shaped die-cutting blade capable of satisfying the recent requirement for severe bending operation. These days, however, the requirement for band-shaped die-cutting blades has become much severer, and those having high "durability" that are resistant to longerterm use than before have become desired.

The present invention is to provide a band-shaped die-cutting blade having good "bendability" and having further improved "durability".

### Solution to Problem

It has been clarified that the above-mentioned object can be attained by using, as the material for the blade, a steel plate that contains Nb and therefore has a structure with a Nb-containing carbide dispersed therein except in the surface layer part of the plate.

Specifically, the present invention provides a steel plate for band-shaped die-cutting blades having excellent durability as set forth in claim 1. Further embodiments of the invention are inter alia disclosed in the dependent claims. The steel plate inter alia comprises surface layer parts each having a depth of not more than 200 µm from the surface on both sides of the steel plate and an region inner between the surface layer parts in the plate thickness direction, which is referred to as "base part".

The base part has a chemical composition that comprises 0.40 to 0.80 mass% C and 0.10 to 0.50 mass% Nb and has a metallographic structure which comprises bainite or tempered martensite and in which a spherical carbide constituted of cementite is present in the bainite or tempered martensite in an amount of 1.0 vol% or more and a Nb-containing carbide having an equivalent-circle diameter of 0.5 µm or more is present at an existential density of 10.0 or more grains per 900 µm², and the base part has a controlled hardness of from 265 to 450 HV, preferably from 300 to 450 HV.

The surface layer part has a decarburized surface layer constituted of a ferrite single-phase structure and having a thickness of 5 µm or more, preferably from 5 to 20 µm, in which in the region to the depth of 15 µm from the surface (referred to as "15-µm-thick surface layer region"), the existential density of the Nb-containing carbide having an equivalent-circle diameter of 0.5 µm or more is from 0 to 5.0 grains per 900 µm².

The base part may have Nb-containing carbide having an equivalent-circle diameter of 1.0 µm or more at an existential density of 10.0 or more grains per 900 µm², and the hardness thereof may be controlled to be from 300 to 450 HV. In this case, in the 15-µm-thick surface layer region, the existential density of the Nb-containing carbide having an equivalent-circle diameter of 1.0 µm or more may be from 0 to 5.0 grains per 900 µm².

Here, the Nb-containing carbide mainly comprises a Nb carbide and can be differentiated from cementite through EDX or the like analysis. The amount of the spherical carbide constituted of cementite and the existential density of the Nb-containing carbide can be determined through image analysis of microscopic image of the cross section parallel to the plate thickness direction of the steel plate. The equivalent-circle diameter corresponds to the diameter of the circle that is presumed to have the same area as the grain appearing in the cross section being analyzed. The existential density of the Nb-containing carbide is determined as follows: A region of 4500 µm² (900 µm² × 5 fields of view) or more is observed, and of the Nb-containing carbide grains existing in the region, the total number of the grains each having the above-mentioned predetermined equivalent-circle diameter (0.5 µm or more, or 1.0 µm or more) is counted, and the value is converted into the density of the grains per 900 µm². In the 15-µm-thick surface layer region, a rectangular region having a length of 15 µm as one side in the plate thickness direction and having an area of 15 × 60 µm (= 900 µm²) may be observed and analyzed in at least 5 fields of view. Regarding the Nb-containing carbide lying across the boundaries of the observing regions, the grain of which a half or more of the area exists in the observing region is counted to be one grain.

"Ferrite single-phase structure" of the surface layer part means a structure in which no metallographic phase to be formed through transformation of bainite, martensite or the like exists and in which the matrix (metal base) is a ferrite single phase.

One specific example of the chemical composition of the base part comprises, as % by mass, 0.40 to 0.80% C, 0.05 to 0.50% Si, 0.14 to 2.0% Mn, 0.002 to 0.020% P, 0.0005 to 0.020% S, 0.01 to 1.00% Cr, 0.10 to 0.50% Nb, 0 to 0.50% Mo, 0 to 0.50% V, 0 to 2.0% Ni, 0 to 0.005% B, and a balance of Fe and inevitable impurities.

The thickness of the steel plate is, for example, from 0.4 to 1.5 mm.

Also in the invention, there is provided a band-shaped die-cutting blade having, at the side edge part of a band-shaped material constituted of the above-mentioned steel plate, a sharpened part having a tapered form. The blade edge may be constituted of a base part controlled to have a hardness of from 265 to 450 HV or from 300 to 450 HV, but the cutting blade having a quenched blade edge part to be formed by quenching the base part so as to have a hardness of at least 500 HV is more effective in point of the sharpness thereof.

### Advantageous Effects of Invention

According to the invention, it has become possible to provide a band-shaped die-cutting blade having good bendability and especially having high durability. The die-cutting blade has a Nb-containing carbide at a suitable density in the base part thereof and therefore the sharpened part thereof is excellent in abrasion resistance, and consequently, the die-cutting blade maintains the original sharpness and cutting accuracy thereof for a long period of time. The life of the die-cutting blade having a induction hardening blade edge is about 2 times that of a conventional ordinary high-frequency quenched die-cutting blade not utilizing the abrasion resistance-improving effect of a Nb-containing carbide. Even though not quenched at high frequency, the die-cutting blade of the invention has a life of about 1.5 times that of the conventional one, and therefore by omitting the high-frequency quenching step, the production cost in the invention can be reduced.

### Brief Description of Drawings

[Fig. 1] This is a view schematically showing the cross-sectional structure of a conventional ordinary band-shaped die-cutting blade of which the bendability has been improved by forming a decarburized surface layer thereon.
[Fig. 2] This is a view schematically showing the abrasion morphology of the sharpened part that is problematic in using the conventional band-shaped die-cutting blade having such a decarburized surface layer thereon.
[Fig. 3] This is a view schematically showing the cross-sectional structure of the cross section cut in parallel to the plate thickness direction of the steel plate for band-shaped die-cutting blades of the invention.

### Description of Embodiments

Fig. 2 schematically shows the abrasion morphology of the sharpened part that is problematic in using a conventional band-shaped die-cutting blade having a decarburized surface layer thereon. The sharpened part is greatly abraded and, as a result, the rigidity of the sharpened part lowers and the dimensional accuracy in cutting worsens. In addition, during cutting, the force to separate the already cut material parts to both sides could not be given sufficiently, and therefore the sharpness of the cutting blade is therefore poor. The invention is to improve the durability of the cutting blade by improving the abrasion resistance of the sharpened part of the blade.

Fig. 3 schematically shows the cross-sectional structure of the cross section cut in parallel to the plate thickness direction of the steel plate for band-shaped die-cutting blades of the invention. The thickness of each region near the surface is extremely overdrawn relative to the plate thickness. In this description, the region to a depth of 200 µm from the surface is referred to as "surface layer part", and the region inner than that region in the plate thickness direction is referred to as "base part" . The surface layer part and the base part do not mean a difference in the structure state therebetween but merely indicate the difference between those regions in point of the depth position from the surface. In other words, there does not occur any rapid structure change in the boundary between the surface layer part and the base part. However, it may be said that at least the base part is a region not influenced by decarburization annealing. Also in this description, the region to a depth of 15 µm from the surface is referred to as "15-µm-thick surface layer region". This does not mean any rapid structure change in the boundary of the 15-µm-thick surface layer region.

### [Chemical Composition of Base Part]

The chemical composition of the base part is directly reflected by the chemical composition of steel in production thereof by smelting. Unless otherwise specifically indicated hereinunder, "%" in expressing chemical composition means "% by mass".

C is an important element for securing the strength of a steel material. In use for band-shaped die-cutting blades, the hardness of the base part must be at least 265 HV, and in some uses, the hardness may be required to be at least 300 HV. In case where the blade edge is quenched, the hardness thereof may be required to be at least 500 HV. Taking these into consideration, steel that contains at least 0.4% C is used here. However, when the C content is more than 0.8%, then the toughness of bainite or tempered martensite may lower and the bendability may degrade; and therefore in the invention, steel having 0.4 to 0.8% C is used.

Nb is an important element for forming a hard Nb-containing carbide that comprises mainly NbC. The Nb-containing carbide dispersed in the base part at a suitable density therein is extremely effective for improving the abrasion resistance of the part. In addition, Nb has an effect of refining the prior austenite grain size in the bainite structure or the tempered martensite structure and is therefore effective for preventing the sharpened part from being cracked in bending. As a result of various investigations, the Nb content must be at least 0.10% for sufficiently exhibiting the above-mentioned effects. However, the existence of too much Nb may be a cause of lowering the bendability, and therefore the Nb content is at most 0.50%.

The other steel components than C and Nb may be controlled within the range to provide the metallographic structure to be mentioned below without detracting the bendability of the steel plate. For example, there are exemplified the following steel components.

Si is an element effective for deoxidization of steel, and the content thereof is preferably from 0.05 to 0.50%.

Mn and Cr are effective for improving the quenchability of steel, and are effective for forming a uniform bainite structure or tempered martensite structure. Preferably, the Mn content is from 0.14 to 2.0%, and the Cr content is from 0.01 to 1.00%. More preferably, the Mn content is at least 0.20%.

P and S may lower the toughness of steel and their content is preferably smaller; however, too excessive dephosphorization and desulfurization is unfavorable as increasing the load in steel making. The P content may be from 0.002 to 0.020%, and the S content may be from 0.0005 to 0.020%.

In addition, if desired, one or more of at most 0.50% of Mo, at most 0.50% of V, at most 2.0% of Ni and at most 0.005% of B may be incorporated in the steel plate.

### [Metallographic Structure of Base Part]

The metallographic structure of the base part to be employed here mainly comprises bainite or tempered martensite for securing the basic characteristics of hardness and abrasion resistance of blades. Preferably, ferrite or pearlite structure does not exist in the part. Whether the part could have a bainite structure or a tempered martensite structure may be determined by the history of thermal treatment. In other words, the former is formed through isothermal transformation treatment in the cooling step from an austenite region; while the latter is formed through quenching treatment from an austenite region to give a martensite structure followed by tempering treatment of the martensite structure. For use for band-shaped die-cutting blades, the hardness of the base part is preferably controlled to be from 265 to 450 HV, more preferably from 300 to 450 HV.

For improving the bendability of the sharpened part in which the base part is exposed out, herein provided is a structure state in which the above-mentioned bainite structure or tempered martensite structure is the base and in which a spherical carbide constituted of cementite is dispersed in the base. As a result of various investigations, when such a spherical carbide exists in the base part in an amount of at least 1.0 vol%, then the bendability of the part is significantly improved. It is considered that the spherical carbide distributed in the base part would cause, when undergone bending deformation, a microscopic yielding by which the local stress concentration of the matrix to lead to cracking could be evaded and the bendability could be thereby improved. Preferably, the grain size (equivalent-circle diameter) of the spherical carbide is from 0.2 to 4.0 µm.

### [Nb-Containing Carbide in Base Part]

The base part is exposed out of the surface in the sharpened part of the blade, and is readily damaged by abrasion (see Fig. 2). In the invention, for improving the abrasion resistance of the base part, there is employed a method of dispersing a Nb-containing carbide in the part. The Nb-containing carbide is a hard compound comprising mainly NbC. It has been confirmed that when the Nb-containing carbide is exposed out and scattered on the surface in the sharpened part of the blade, then the slidability of the part is bettered and the friction surface thereof is hardly abraded. As a result of detailed investigations made by the present inventors, when the existential density of the Nb-containing carbide having an equivalent-circle diameter of at least 1.0 µm is at least 10.0 grains per 900 µm² in the base part, then the abrasion resistance of the blade to cardboards is noticeably improved. Also according to the present inventors' studies, even a relatively fine Nb-containing carbide having an equivalent-circle diameter of from 0.5 to less than 1.0 µm is effective for improving the abrasion resistance of the base part. As a result of various investigations, in case where the existential density of the Nb-containing carbide having an equivalent-circle diameter of 0.5 µm or more is at least 10.0 grains per 900 µm² in the part, then the part can sufficiently secure abrasion resistance to cardboards even though the existential density of the Nb-containing carbide having an equivalent-circle diameter of 1.0 µm or more is less than 10.0 grains per 900 µm² therein. The existential density of the Nb-containing carbide in the base part can be controlled mainly by the Nb content in steel. Existence of too much Nb-containing carbide would detract from the bendability of the base part, and therefore in general, the existential density of the Nb-containing carbide having an equivalent-circle diameter of at least 1.0 µm or at least 0.5 µm may be to fall within a range of at most 30.0 grains per 900 µm² in the base part, and may be controlled to be at most 20.0 grains. Here the unit area is 900 µm², and this is for matching with the value of the existential density of the Nb-containing carbide in the 15-µm-thick surface layer region.

### [Decarburized Surface Layer]

A decarburized surface layer is formed on the surface on both sides of the steel plate. The decarburized surface layer is a region in which the carbon concentration is reduced through decarburization annealing and in which there is formed no transformed phase of bainite or martensite after thermal refining treatment but the matrix is a ferrite single phase. The decarburized surface layer is soft and ductile, and therefore, when bent after the steel plate is worked into a band-shaped die-cutting blade, the layer exhibits the function of preventing the surface cracking in the body part. The body part is thick and therefore can hardly secure sufficient bendability according to the bendability improving method of dispersing a spherical carbide therein, and consequently, the formation of the decarburized layer is necessary. As a result of various investigations, the thickness of the decarburized layer must be at least 5 µm. In general, the thickness may fall within a range of from 5 to 20 µm.

### [Nb-Containing Carbide in 15-µm-thick Surface Layer Region]

On the other hand, it has been known that the Nb-containing carbide existing in the surface layer part causes degradation of the bendability of the part. Though not always clear, the reason behind it would be because of the extremely large hardness difference between the decarburized surface layer and the Nb-containing carbide. It is important that, in the surface layer part, especially in the region thereof nearer to the surface, a Nb-containing carbide exists as little as possible for keeping good bendability of the decarburized surface layer. As a result of detailed investigations, in case where the existential density of the Nb-containing carbide having an equivalent-circle diameter of at least 1.0 µm in the base part is controlled to be at least 10.0 grains per 900 µm², good bendability can be secured so far as the existential density of the Nb-containing carbide having an equivalent-circle diameter of at least 1.0 µm in the 15-µm-thick surface layer region is controlled to be from 0 to 5.0 grains per 900 µm². The Nb-containing carbide existing in the region nearer to the center part of the plate thickness than that 15-µm-thick surface layer region does not have any significant influence on the bendability of the body part. In case where the existential density of the Nb-containing carbide having an equivalent-circle diameter of at least 0.5 µm in the base part is controlled to be at least 10.0 grains per 900 µm², good bendability can be secured so far as the existential density of the Nb-containing carbide having an equivalent-circle diameter of at least 0.5 µm in the 15-µm-thick surface layer region is controlled to be from 0 to 5.0 grains per 900 µm².

For reducing the existential density of the Nb-containing carbide in the 15-µm-thick surface layer region, it is effective that the surface layer part of the steel plate is derived from the surface layer part to a depth of around 20 mm of a slab (for example, continuously-cast slab) (the part solidified at a high solidification rate). The cooling rate in solidification is large in the area around the surface layer part of a slab, and therefore the network of the eutectic carbide in the solidified structure is smaller than in the internal region of the slab. By utilizing the difference in the carbide distribution between the regions in the slab, the existential density of the Nb-containing carbide in the 15-µm-thick surface layer region can be made smaller than in the base part. On the contrary, in case where the surface layer part of the steel plate is derived from the part having a large eutectic carbide network inside the slab, a structure state where the coarse eutectic carbide network may be broken or cut through hot rolling or cold rolling is formed in the surface layer part of the steel plate and, as a result, the existential density of the Nb-containing carbide in the 15-µm-thick surface layer region could not be sufficiently reduced.

### [Production Process]

For obtaining the steel plate of the invention, a decarburization annealing step and a thermal refining treatment step are necessary. Concretely, the following process is exemplified. Steelmaking→hot rolling → cold rolling → decarburization annealing → cold rolling → thermal refining treatment

Here the steel material to be hot-rolled is preferably one in which the 20-mm-thick surface layer region of a slab appears on the surface thereof. When a slab from which the surface layer part was removed excessively is used, then the slab shall be hot-rolled in a state where the above-mentioned coarse eutectic carbide network is kept appearing around the surface of the slab, and if so, it would be difficult to reduce the existential density of the Nb-containing carbide in the 15-µm-thick surface layer region.

Preferably, the final plate thickness is from 0.4 to 1.5 mm.

The decarburization annealing may be attained through thermal treatment of, for example, exposing the surface of the steel plate to a gaseous atmosphere of 75% H₂ + 25% N₂ + H₂O at 700°C having a controlled dew point, for from 3 to 10 hours.

For the thermal refining treatment, for example, the following condition may be exemplified.
In a case of giving a bainite structure: 860°C × 120 sec → rapid cooling → 400°C x 480 sec → air cooling to room temperature
In a case of giving a tempered martensite structure: 860°C × 120 sec → rapid cooling to about 60°C → 500°C × 180 sec → air cooling to room temperature

In the thermal refining treatment of these cases, when the austenization temperature is too high or when the austenization time is too long, then it would be difficult to disperse a spherical carbide in an amount of 1.0 vol% or more.

After the thermal refining treatment, the steel plate having the above-mentioned controlled structure state is slit into a predetermined width, and the side edge thereof is sharpened to be a sharpened part having a tapered form, thereby giving a band-shaped die-cutting blade. If desired, the blade edge is quenched at high frequency thereby giving a band-shaped die-cutting blade having much more excellent durability.

### Examples

### <<Example 1>>

Steel shown in Table 1 was produced, and the obtained slab was heated at 1250°C for 1 hour, and then hot-rolled at a finishing rolling temperature of 850°C and a coiling temperature 550°C to give a hot-rolled steel plate having a thickness of 3 mm. Some samples (No. 4 in Table 2) were hot-rolled in a state with a part, in which the network of the eutectic carbide in the solidified structure was large, kept appearing on the surface thereof, and therefore of those samples, the 20-mm-thick surface layer part of the slab was cut off and the resulting steel material was hot-rolled. Thus obtained, the hot-rolled steel plate was cold-rolled to have a thickness of 2.2 mm, then decarburized and annealed, further cold-rolled to have a thickness of 0.7 mm, and thereafter treated for quenching/tempering or isothermal transformation in a continuous annealing furnace to give a sample material.

The heat treatment condition was as follows.

### [Decarburization Annealing]

The surface of the steel plate was exposed to a gaseous atmosphere of 75% H₂ + 25% N₂ + H₂O at 700°C having a controlled dew point, for 5 hours.

### [Isothermal Transformation Treatment]

Kept at 780 to 980°C for 30 to 600 seconds → rapidly cooled in a molten bismuth bath kept at 320 to 480°C → kept at 320 to 480°C for 60 to 600 seconds → air-cooled to room temperature.

### [Quenching/Tempering]

Kept at 780 to 980°C for 30 to 600 seconds → rapidly cooled in a quenching liquid at 60°C → kept at 400°C for 300 seconds → air-cooled to room temperature.

### [Table 1]

**Table 1**

| Steel | Chemical Composition (mass%) | | | | | | | | Classification |
|---|---|---|---|---|---|---|---|---|---|
| | C | Si | Mn | P | S | Cr | Nb | Others | |
| a | 0.51 | 0.20 | 0.75 | 0.010 | 0.004 | 0.50 | 0.21 | - | Steel of the Invention |
| b | 0.50 | 0.22 | 0.75 | 0.012 | 0.004 | 0.52 | 0.30 | - | Steel of the Invention |
| c | 0.42 | 0.21 | 0.76 | 0.014 | 0.004 | 0.50 | 0.20 | - | Steel of the Invention |
| d | 0.21 | 0.22 | 0.74 | 0.009 | 0.002 | 0.13 | 0.18 | - | Comparative Steel |
| e | 0.42 | 0.22 | 0.76 | 0.009 | 0.003 | 0.15 | - | - | Comparative Steel |
| f | 0.48 | 0.19 | 0.14 | 0.007 | 0.003 | 0.14 | 0.15 | - | Steel of the Invention |
| g | 0.54 | 0.23 | 0.83 | 0.010 | 0.004 | 0.12 | - | - | Comparative Steel |
| h | 0.56 | 0.23 | 0.81 | 0.010 | 0.004 | 0.12 | 0.13 | - | Steel of the Invention |
| i | 0.77 | 0.21 | 0.80 | 0.008 | 0.002 | 0.15 | 0.28 | - | Steel of the Invention |
| j | 0.87 | 0.25 | 0.81 | 0.007 | 0.005 | 0.03 | 0.30 | - | Comparative Steel |
| k | 0.65 | 0.20 | 0.41 | 0.007 | 0.005 | 0.10 | 0.56 | - | Comparative Steel |
| l | 0.50 | 0.20 | 0.75 | 0.008 | 0.004 | 0.50 | 0.21 | Mo: 0.21 | Steel of the Invention |
| m | 0.51 | 0.21 | 0.75 | 0.010 | 0.003 | 0.50 | 0.20 | V: 0.22 | Steel of the Invention |
| n | 0.50 | 0.21 | 0.75 | 0.009 | 0.004 | 0.50 | 0.20 | Ni: 0.82 | Steel of the Invention |
| o | 0.48 | 0.20 | 0.73 | 0.010 | 0.004 | 0.51 | 0.21 | B: 0.003 | Steel of the Invention |

| | | | | | | | | | |
|---|---|---|---|---|---|---|---|---|---|
| Underlined: Outside the scope of the invention. | | | | | | | | | |

### [Structure Observation]

The cross section of each sample material, cut in the plate thickness direction thereof, was observed to determine the thickness of the decarburized surface layer (mean thickness of the area of which the matrix is a ferrite single phase), the metallographic structure of the base part, the areal ratio (vol%) of the spherical carbide constituted of cementite in the base part, and the existential density of the Nb-containing carbide having an equivalent-circle diameter of at least 1.0 µm in the base part and in the 15-µm-thick surface layer region. Whether the carbide could be a Nb-containing carbide was confirmed through EDX analysis. The amount of the spherical carbide and the equivalent-circle diameter of the Nb-containing carbide were determined through image analysis. The existential ratio of the Nb-containing .carbide was computed by analyzing a region of 4500 µm² both in the base part and in the 15-µm-thick surface layer region to thereby determine the density thereof per 900 µm². In the 15-µm-thick surface layer region of those, five rectangular visual fields of 15 × 60 µm (= 900 µm²) each having a 15-µm-long side in the thickness direction were analyzed.

Here, the steel d in Table 1 has a small C content and therefore could not have a sufficient hardness suitable to die-cutting blades, and consequently, this was excluded from investigation objects except for the existential density of the Nb-containing carbide having an equivalent-circle diameter of at least 1.0 µm in the base part and in the 15-µm-thick surface layer region.

The surface part to a depth of at least 200 µm was cut off to leave the base part alone. From this, an analysis sample was collected and analyzed for the e chemical composition of the base part. As a result, the data of every steel well corresponded to the analysis values of the ingot sample shown in Table 1. Accordingly, it may be said that the analysis values in Table 1 can be taken as the chemical composition of the base part, directly as they are.

### [Bendability Evaluation]

A rectangular test piece having a length of 100 mm and a width of 25 mm was cut out of each sample material in such a manner that the rolling direction could be the lengthwise direction thereof. One side edge of the test piece was sharpened to be a sharpened part, thereby producing a die-cutting blade sample having a tool angle of 45°. The thickness of the body part was 0.7 mm.

The sharpened sample was bent at a bending angle of 120° with a punch having a tip radius of 0.25 mm, whereupon the bendability of both the body part and the sharpened pat was evaluated. The evaluation criteria for both the body part and the sharpened part are as follows, and the samples given an evaluation score of 4 or more were approved as good.

Evaluation score 5: Neither cracking nor surface roughening was seen.

Evaluation score 4: Cracking was not seen, but surface roughening was seen.

Evaluation score 3: Fine cracks were seen.

Evaluation score 2: Fine cracks connecting in the width direction were seen.

Evaluation score 1: The sample was broken.

### [Durability Evaluation]

From the samples that had been approved as good in point of the bendability thereof, a band-shaped die-cutting blade having the same blade edge shape as in the above was produced and the blade edge thereof was quenched at high frequency, then bent to a square die-cutting shape, and this was inlaid into a die mold formed of a plywood plate thereby producing a die-cutting blade. Using the square die-cutting blade, papers for cutting test were cut under a predetermined load and at a predetermined pushing rate, whereupon the number of the papers cut under the condition under which a practicably sufficient cutting accuracy and a good operability level could be maintained was counted under predetermined standards. The results were compared with the same test results with a conventional band-shaped die-cutting blade formed of S55C-corresponding steel (no Nb added) defined in JIS. The samples of which the durability was considered to be obviously higher than that of the S55C-corresponding steel were evaluated as "O" (durability: good) , while the samples of which the durability was considered to be comparable to that of the S55C-corresponding steel were evaluated as "X" (durability: average) . The samples with the evaluation of "O" were approved as good.

The results are shown in Table 2.

### [Table 2]

**Table 2**

| No. | Steel | Surface Layer Part | | Base Part | | | | Bendability Evaluation | | Durability Evaluation | Classification |
|---|---|---|---|---|---|---|---|---|---|---|---|
| | | Thickness of Decarburized Layer (µm) | Density of Nb-Containing Carbide in 15-µm-thick Surface Layer Region* (grains/900 µm²) | Metallographic Structure *1 | Hardness (HV) | Amount of Spherical Carbide (vol%) | Density of Nb-Containing Carbide* (grains/900 µm²) | Body Part | Sharpened part | | |
| 1 | a | 12.1 | 1.0 | B+C | 419 | 1.9 | 13.2 | 5 | 4 | ○ | Sample of the Invention |
| 2 | b | 12.5 | 1.2 | B+C | 411 | 2.2 | 13.0 | 5 | 4 | ○ | Sample of the Invention |
| 3 | c | 7.0 | 0 | B+C | 324 | 1.1 | 12.4 | 5 | 4 | ○ | Sample of the Invention |
| 4 | | 7.1 | 23.4 | B+C | 345 | 3.2 | 34.0 | 2 | 2 | - | Comparative Sample |
| 5 | d | - | 1.0 | B+C | - | - | 10.2 | - | - | - | Comparative Sample |
| 6 | e | 7.2 | 0 | B+C | 312 | 1.2 | 0 | 5 | 5 | × | Comparative Sample |
| 7 | f | 11.4 | 1.8 | B+C | 267 | 1.8 | 13.1 | 5 | 5 | ○ | Sample of the Invention |
| 8 | 9 | 11.5 | 0 | B+C | 378 | 1.7 | 0 | 5 | 5 | × | Comparative Sample |
| 9 | h | 12.2 | 2.1 | B+C | 334 | 2.1 | 14.2 | 5 | 5 | ○ | Sample of the Invention |
| 10 | | 5.7 | 2.1 | TM+C | 385 | 1.2 | 14.2 | 5 | 4 | ○ | Sample of the Invention |
| 11 | i | 13.3 | 5.3 | B+C | 380 | 2.4 | 16.0 | 5 | 5 | ○ | Sample of the Invention |
| 12 | j | 17.0 | 5.0 | B+C | 463 | 3.0 | 15.8 | 2 | 2 | - | Comparative Sample |
| 13 | k | 10.1 | 25.2 | B+C | 451 | 1.8 | 36.5 | 2 | 2 | - | Comparative Sample |
| 14 | l | 12.2 | 1.3 | B+C | 415 | 2.0 | 13.5 | 5 | 4 | ○ | Sample of the Invention |
| 15 | m | 12.0 | 1.0 | B+C | 412 | 2.1 | 13.0 | 5 | 4 | ○ | Sample of the Invention |
| 16 | n | 12.3 | 0.8 | B+C | 415 | 2.0 | 13.2 | 5 | 4 | ○ | Sample of the Invention |
| 17 | o | 12.1 | 1.2 | B+C | 413 | 1.9 | 13.1 | 5 | 4 | ○ | Sample of the Invention |

| | | | | | | | | | | | |
|---|---|---|---|---|---|---|---|---|---|---|---|
| *1) B: bainite, TM: tempered martensite, C: spherical carbide *: The number of grains having an equivalent-circle diameter of at least 1.0 µm was counted. | | | | | | | | | | | |

As known from Table 2, the steel plates of the present invention had a predetermined metallographic structure state both in the surface layer part and in the base part; and when these are used, it is possible to realize band-shaped die-cutting blades excellent in bendability and durability.

As opposed to these, for the comparative sample of No. 4, a steel plate in which the part having a large eutectic carbide network in the solidified structure appeared on the surface thereof was hot rolled. Therefore in this, a large quantity of the Nb-containing carbide that would be derived from the coarse eutectic carbide network as broken and cut through hot-rolling and cold-rolling existed in the surface layer part of the obtained steel plate, and the bendability of the comparative sample was poor. In No. 5, the C content was low and therefore the blade edge could not be given a hardness of 500 HV through induction hardening. For Nos. 6 and 8, used was a Nb-free steel, and in these, the sharpened part could not enjoy the abrasion resistance-improving effect to be given by a Nb-containing carbide, or that is, the durability of these samples was not improved. For No. 12, used was a steel having a too high C content, and therefore the bendability of the sample was poor. For No. 13, used was a steel having a too high Nb content, and in this therefore, the amount of the Nb-containing carbide was large and the bendability of the sample was poor.

### <<Example 2>>

Here the existential density of the Nb-containing carbide in the base part was determined by counting the number of the grains having an equivalent-circle diameter of at least 0.5 µm, and the samples were tested in the same manner as in Example 1. The steel shown in Table 1 and Table 3 was produced, then cold-rolled to have a thickness of 0.7 mm under the same condition as in Example 1, and thereafter treated for quenching/tempering or isothermal transformation in a continuous annealing furnace to give a sample material. The condition for the quenching/tempering treatment or the isothermal transformation treatment was the same as in Example 1.

### [Table 3]

**Table 3**

| Steel | Chemical Composition (mass%) | | | | | | | | Classification |
|---|---|---|---|---|---|---|---|---|---|
| | C | Si | Mn | P | S | Cr | Nb | Others | |
| p | 0.45 | 0.29 | 0.64 | 0.011 | 0.003 | 0.43 | 0.11 | - | Steel of the Invention |

### [Structure Observation]

The cross section of each sample material, cut in the plate thickness direction thereof, was observed to determine the thickness of the decarburized surface layer (mean thickness of the area of which the matrix is a ferrite single phase), the metallographic structure of the base part, the areal ratio (vol%) of the spherical carbide constituted of cementite in the base part, and the existential density of the Nb-containing carbide in the base part and in the 15-µm-thick surface layer region. For the existential density of the Nb-containing carbide, the number of the grains having an equivalent-circle diameter of at least 0.5 µm was counted in the base part, while the number of the grains having an equivalent-circle diameter of at least 1.0 µm was counted in the 15-µm-thick surface layer region. The measurement method is the same as in Example 1.

### [Bendability Evaluation]

The bendability was evaluated according to the same method as in Example 1.

### [Durability Evaluation]

From the samples that had been approved as good in point of the bendability thereof, a band-shaped die-cutting blade having the same blade edge shape as in the above was produced. Here, some samples were quenched at high frequency but some others were not. All these samples were tested according to the same test method as in Example 1. Thus tested, the data of the samples were compared with the same test results with a conventional band-shaped die-cutting blade formed of S55C-corresponding steel (no Nb added) defined in JIS.

The samples of which the durability was considered to be at least about 2 times that of the S55C-corresponding steel were evaluated as "OO" (durability: excellent); the samples of which the durability was considered to be at least about 1.5 times that of the S55C-corresponding steel were evaluated as "O" (durability: good); and the samples of which the durability was considered to be comparable to that of the S55C-corresponding steel were evaluated as "X" (durability: average) . Of those that had been quenched at high frequency, the samples with the evaluation of "OO" were approved as good, while of those that had not been quenched at high frequency, the samples with the evaluation of "O" were approved as good.

The results are shown in Table 4.

### [Table 4]

**Table 4**

| No. | Steel | Surface Layer Part | | Base Part | | | | High-Frequency Quenching | | Bendability Evaluation | | Durability Evaluation | Classification |
|---|---|---|---|---|---|---|---|---|---|---|---|---|---|
| | | Thickness of Decarburized Layer (µm) | Density of Nb-Containing Carbide in 15-µm-thick Surface Layer Region*1 (grains/900 µm²) | Metallographic Structure *1 | Hardness (HV) | Amount of Spherical Carbide (vol%) | Density of Nb-Containing Carbide*1 (grains/900 µm²) | yes or no | Hardness of Blade Edge (HV) | Body Part | Sharpened part | | |
| 31 | a | 12.1 | 3.6 | B+C | 419 | 1.9 | 14.5 | no | 419 | 5 | 5 | ○ | Sample of the Invention |
| 32 | b | 12.5 | 4.2 | B+C | 411 | 2.2 | 15.3 | yes | 542 | 5 | 4 | ○○ | Sample of the Invention |
| 33 | c | 7.0 | 0.3 | B+C | 324 | 1.1 | 14.2 | yes | 515 | 5 | 4 | ○○ | Sample of the Invention |
| 34 | | 7.1 | 22.1 | B+C | 345 | 3.2 | 36.8 | yes | 515 | 2 | 2 | ○○ | Comparative Sample |
| 35 | d | - | 4.5 | B+C | - | - | 13.6 | - | - | - | - | - | Comparative Sample |
| 36 | e | 7.2 | 0 | B+C | 312 | 1.2 | 0 | yes | 476 | 5 | 5 | × | Comparative Sample |
| 37 | f | 11.4 | 3.6 | B+C | 267 | 1,8 | 16.2 | - | - | 5 | - | - | Sample of the Invention |
| 38 | g | 11.5 | 0 | B+C | 378 | 1.7 | 0 | yes | 559 | 5 | 5 | × | Comparative Sample |
| 39 | h | 12.2 | 4.2 | B+C | 334 | 2.1 | 17.8 | yes | 564 | 5 | 5 | ○○ | Sample of the Invention |
| 40 | | 5.7 | 4.8 | TM+C | 385 | 1.2 | 17.8 | yes | 564 | 5 | 4 | ○○ | Sample of the Invention |
| 41 | i | 13.3 | 4.4 | B+C | 380 | 2.4 | 19.1 | yes | 723 | 5 | 4 | ○○ | Sample of the Invention |
| 42 | j | 17.0 | 5.9 | B+C | 463 | 3.0 | 18.4 | yes | 830 | 2 | 2 | - | Comparative Sample |
| 43 | k | 10.1 | 25.2 | B+C | 451 | 1.8 | 39.4 | yes | 664 | 2 | 2 | - | Comparative Sample |
| 44 | l | 12.2 | 4.3 | B+C | 415 | 2.0 | 16.5 | no | 415 | 5 | 5 | ○ | Sample of the Invention |
| 45 | m | 12.0 | 4.0 | B+C | 412 | 2.1 | 15.8 | no | 412 | 5 | 5 | ○ | Sample of the Invention |
| 46 | n | 12.3 | 3.9 | B+C | 415 | 2.0 | 15.9 | yes | 546 | 5 | 4 | ○○ | Sample of the Invention |
| 47 | o | 12.1 | 4.1 | B+C | 413 | 1.9 | 16.0 | yes | 542 | 5 | 4 | ○○ | Sample of the Invention |
| 48 | D | 11.8 | 2.8 | B+C | 314 | 1.9 | 10.2 | yes | 507 | 5 | 4 | ○○ | Sample of the Invention |

| | | | | | | | | | | | | | |
|---|---|---|---|---|---|---|---|---|---|---|---|---|---|
| *1) B: bainite, TM: tempered martensite, C: spherical carbide *1: The number of grains having an equivalent-circle diameter of at least 0.5 µm was counted. | | | | | | | | | | | | | |

As known from Table 4, using the steel plate of the invention in which the existential density of the Nb-containing carbide having an equivalent-circle diameter of at least 0.5 µm in the surface layer part was reduced to from 0 to 5.0 grains per 900 µm² and the existential density of the Nb-containing carbide having an equivalent-circle diameter of at least 0.5 µm in the base part is from at least 10.0 grains per 900 µm², it is possible to realize a band-shaped die-cutting blade having good bendability and durability. Regarding the durability, the invention realizes better durability than that of conventional materials even in the absence of induction hardening at the blade edge.

As opposed to these, for the comparative sample of No. 34, a steel plate in which the part having a large eutectic carbide network in the solidified structure appeared on the surface thereof was hot rolled. Therefore in this, a large quantity of the Nb-containing carbide that would be derived from the coarse eutectic carbide network as broken and cut through hot-rolling and cold-rolling existed in the surface layer part of the obtained steel plate, and the bendability of the comparative sample was poor. In No. 35, the C content was low and therefore the sample could not realize good durability irrespective of the presence or absence of induction hardening at the blade edge. For Nos. 36 and 38, used was a Nb-free steel, and in these, the sharpened part could not enjoy the abrasion resistance-improving effect to be given by a Nb-containing carbide, or that is, the durability of these samples was not improved. For No. 42, used was a steel having a too high C content, and therefore the bendability of the sample was poor. For No. 43, used was a steel having a too high Nb content, and in this therefore, the amount of the Nb-containing carbide was large and the bendability of the sample was poor.

## Claims

1. A steel plate for band-shaped die-cutting blades having excellent durability, the steel plate comprising surface layer parts each having a depth of not more than 200 µm from the surface on both sides of the steel plate and a base part located between the surface layer parts in the plate thickness direction, **characterized in that**:
the base part has a chemical composition that contains 0.40 to 0.80 mass% C and 0.10 to 0.50 mass% Nb and has a metallographic structure which comprises bainite or tempered martensite and in which a spherical carbide constituted of cementite is present in the bainite or tempered martensite in an amount of 1.0 vol% or more and a Nb-containing carbide having an equivalent-circle diameter of 0.5 µm or more is present at an existential density of 10.0 or more grains per 900 µm², and the base part has a controlled hardness of from 265 to 450 HV,
the surface layer part has a decarburized surface layer constituted of a ferrite single-phase structure and having a thickness of 5 µm or more from the outer surface of the steel plate, and
the existential density of the Nb-containing carbide having an equivalent-circle diameter of 0.5 µm or more in a region to the depth of 15 µm from the outer surface of the surface layer part, which is referred to as 15-µm-thick surface layer region is from 0 to 5.0 grains per 900 µm²,
wherein the existential density of the Nb-containing carbide is determined by observing a region of 4500 µm² or more, of a cross section parallel to the plate thickness direction of the steel plate, both in the base part and the 15-pm-thick surface layer region, counting the total number of the grains having equivalent-circle diameter of 0.5 µm or more in the respective region, and converting the number into the density of the grains per 900 µm² for the base part and the 15-pm-thick surface layer region, respectively.

2. The steel plate for band-shaped die-cutting blades as claimed in claim 1, wherein the chemical composition of the base part comprises, as % by mass, 0.40 to 0.80% C, 0.05 to 0.50% Si, 0.14 to 2.0% Mn, 0.002 to 0.020% P, 0.0005 to 0.020% S, 0.01 to 1.00% Cr, 0.10 to 0.50% Nb, 0 to 0.50% Mo, 0 to 0.50% V, 0 to 2.0% Ni, 0 to 0.005% B, and a balance of Fe and inevitable impurities.

3. The steel plate for band-shaped die-cutting blades as claimed in claim 1 or 2, wherein the thickness of the decarburized surface layer is from 5 to 20 µm.

4. The steel plate for band-shaped die-cutting blades as claimed in any of claims 1 to 3, wherein the thickness of the steel plate is from 0.4 to 1.5 mm.

5. The steel plate for band-shaped die-cutting blades as claimed in any of claims 1 to 4, wherein
the base part has an Nb-containing carbide having an equivalent-circle diameter of 1.0 µm or more at an existential density of 10.0 or more grains per 900 µm², and a controlled hardness of from 300 to 450 HV and
the existential density of the Nb-containing carbide having an equivalent-circle diameter of 1.0 µm or more in the 15-µm-thick surface layer region is from 0 to 5.0 grains per 900 µm².

6. The steel plate for band-shaped die-cutting blades as claimed in any of claims 1 to 5, wherein the existential density of the Nb-containing carbide in the 15-µm-thick surface layer region is determined by observing at least 5 rectangular regions each having a side extending 15 µm in the plate thickness direction and a side of at least 60 µm perpendicular thereto.

7. A band-shaped die-cutting blade having, at the side edge part of a band-shaped material constituted of the steel plate of any of claims 1 to 6, a sharpened part having a tapered form.

8. A band-shaped die-cutting blade having, at the side edge part of a band-shaped material constituted of the steel plate of any of claims 1 to 6, a sharpened part having a tapered form, and having, at the tip of the sharpened part, a quenched blade edge part formed by quenching the structure of the base part to have a hardness of 500 HV or more.

## Patentansprüche

1. Stahlplatte für bandförmige Formschneidklingen mit hervorragender Haltbarkeit, wobei die Stahlplatte Oberflächenschichtteile, die jeweils eine Tiefe von nicht mehr als 200 µm von der Oberfläche haben, auf beiden Seiten der Stahlplatte aufweist, und einen Basisteil, der zwischen den Oberflächenschichtteilen in der Dickenrichtung der Platte angeordnet ist, **dadurch gekennzeichnet, dass**
der Basisteil eine chemische Zusammensetzung hat, die 0,40 bis 0,80 Massen-% C und 0,10 bis 0,50 Massen-% Nb hat und eine metallographische Struktur hat, welche Bainit oder angelassenem Martensit aufweist, in welchem ein kugelförmiges bzw. sphärisches Carbid bestehend aus Zementit in dem Bainit oder angelassenem Martensit in einer Menge von 1,0 Volumen-% oder mehr vorhanden ist, und ein Nb enthaltendes Carbid mit einem Äquivalenzkreisdurchmesser von 0,5 µm oder mehr in einer existentiellen bzw. vorliegenden Dichte von 10,0 oder mehr Körnern pro 900 µm² vorhanden ist, und wobei der Basisteil eine gesteuerte bzw. eingestellte Härte von 265 bis 450 HV hat,
der Oberflächenschichtteil eine decarburisierte bzw. entkohlte Oberflächenschicht hat, welche aus einer Ferrit-Einzelphasenstruktur besteht und eine Dicke von 5 µm oder mehr von der Außenfläche der Stahlplatte hat, und
die existentielle bzw. vorliegende Dichte des Nb enthaltenden Carbids mit einem Äquivalenzkreisdurchmesser von 0,5 µm oder mehr in einer Region bis zur Tiefe von 15 µm von der Außenfläche des Oberflächenschichtteils, was als Oberflächenschichtregion von 15 µm Dicke bezeichnet wird, von 0 bis 5,0 Körnern pro 900 µm² ist,
wobei die existentielle bzw. vorliegende Dichte des Nb enthaltenden Carbids bestimmt wird durch Betrachten einer Region von 4500 µm² oder mehr eines Querschnittes parallel zur Plattendickenrichtung der Stahlplatte, und zwar sowohl im Basisteil als auch in der Oberflächenschichtregion von 15 µm Dicke, durch Zählen der Gesamtzahl der Körner in der jeweiligen Region mit einem Äquivalenzkreisdurchmesser von 0,5 µm oder mehr und durch Umwandeln der Zahl in die Dichte der Körner pro 900 µm² für den Basisteil bzw. die Oberflächenschichtregion von 15 µm Dicke.

2. Stahlplatte für bandförmige Formschneidklingen nach Anspruch 1, wobei die chemische Zusammensetzung des Basisteils in Massen-% Folgendes aufweist: 0,40 bis 0,80% C, 0,05 bis 0,50% Si, 0,14 bis 2,0% Mn, 0,002 bis 0,020% P, 0,0005 bis 0,020% S, 0,01 bis 1,00% Cr, 0,10 bis 0,50% Nb, 0 bis 0,50% Mo, 0 bis 0,50% V, 0 bis 2,0% Ni, 0 bis 0,005% B, und wobei der Rest Fe und unvermeidbare Verunreinigungen ist.

3. Stahlplatte für bandförmige Formschneidklingen nach Anspruch 1 oder 2, wobei die Dicke der entkohlten Oberflächenschicht von 5 bis 20 µm ist.

4. Stahlplatte für bandförmige Formschneidklingen nach einem der Ansprüche 1 bis 3, wobei die Dicke der Stahlplatte von 0,4 bis 1,5 mm ist.

5. Stahlplatte für bandförmige Formschneidklingen nach einem der Ansprüche 1 bis 4, wobei
der Basisteil ein Nb enthaltendes Carbid mit einem Äquivalenzkreisdurchmesser von 1,0 µm oder mehr mit einer existentiellen bzw. vorliegenden Dichte von 10,0 oder mehr Körnern pro 900 µm² und eine gesteuerte bzw. eingestellte Härte von 300 bis 450 HV hat, und
die existentielle bzw. vorliegende Dichte des Nb enthaltenden Carbids mit einem Äquivalenzkreisdurchmesser von 1,0 µm oder mehr in der Oberflächenschichtregion von 15 µm Dicke von 0 bis 5,0 Körnern pro 900 µm² ist.

6. Stahlplatte für bandförmige Formschneidklingen nach einem der Ansprüche 1 bis 5, wobei die existentielle bzw. vorliegende Dichte des Nb enthaltenden Carbids in der Oberflächenschichtregion von 15 µm Dicke bestimmt wird durch Betrachten von mindestens 5 rechteckigen Regionen, die jeweils eine Seitenerstreckung von 15 µm in der Dickenrichtung der Platte und eine Seite von mindestens 60 µm senkrecht dazu haben.

7. Bandförmige Formschneidklinge, die an dem Seitenkantenteil eines bandförmigen Materials, welches aus der Stahlplatte nach einem der Ansprüche 1 bis 6 gebildet ist, einen geschärften Teil mit einer verjüngten Form hat.

8. Bandförmige Formschneidklinge, die an dem Seitenkantenteil eines bandförmigen Materials, welches aus der Stahlplatte nach einem der Ansprüche 1 bis 6 gebildet ist, einen geschärften Teil mit einer verjüngten Form hat, und die an der Spitze des geschärften Teils einen abgeschrägten Klingenschneidenteil hat, der gebildet wird durch Abschrecken der Struktur des Basisteils, so dass dieser eine Härte von 500 HV oder mehr hat.

## Revendications

1. Plaque d'acier pour lames de découpage à la presse en forme de bande ayant une excellente durabilité, la plaque d'acier comprenant des parties de couche de surface ayant chacune une profondeur de pas plus de 200 µm à partir de la surface des deux côtés à la fois de la plaque d'acier et une partie de base située entre les parties de couche de surface dans la direction d'épaisseur de la plaque, **caractérisée en ce que** :
la partie de base a une composition chimique qui contient 0,40 à 0,80 % en masse de C et 0,10 à 0,50 % en masse de Nb et a une structure métallographique qui comprend de la bainite ou de la martensite trempée et dans laquelle un carbure sphérique constitué de cémentite est présent dans la bainite ou la martensite trempée en une quantité de 1,0 % en volume ou plus et un carbure contenant du Nb ayant un diamètre de cercle équivalent de 0,5 µm ou plus est présent à une densité existentielle de 10,0 grains ou plus par 900 µm², et la partie de base a une dureté contrôlée de 300 à 450 HV,
la partie de couche de surface a une couche de surface décarburée constituée d'une structure à une seule phase de ferrite et ayant une épaisseur de 5 µm ou plus à partir de la surface externe de la plaque d'acier, et
la densité existentielle du carbure contenant du Nb ayant un diamètre de cercle équivalent de 0,5 µm ou plus dans une région jusqu'à la profondeur de 15 µm à partir de la surface externe de la partie de couche de surface, qui est désignée comme étant une région de couche de surface épaisse de 15 µm, est de 0 à 5,0 grains par 900 µm²,
dans laquelle la densité existentielle du carbure contenant du Nb est déterminée en observant une région de 4500 µm² ou plus, d'une section transversale parallèle à la direction d'épaisseur de plaque de la plaque d'acier, à la fois dans la partie de base et dans la région de couche de surface épaisse de 15 µm, en comptant le nombre total de grains ayant un diamètre de cercle équivalent de 0,5 µm ou plus dans la région respective, et convertissant le nombre en la densité de grains par 900 µm² pour la partie de base et pour la région de couche de surface épaisse de 15 µm, respectivement.

2. Plaque d'acier pour lames de découpage à la presse en forme de bande selon la revendication 1, dans laquelle la composition chimique de la partie de base comprend, en pourcentage % en masse, 0,40 à 0,80 % de C, 0,05 à 0,50 % de Si, 0,14 à 2,0 % de Mn, 0,002 à 0,020 % de P, 0,0005 à 0,020 % de S, 0,01 à 1,00 % de Cr, 0,10 à 0,50 % de Nb, 0 à 0,50 % de Mo, 0 à 0,50 % de V, 0 à 2,0 % de Ni, 0 à 0,005 % de B, et le reste de Fe et d'impuretés inévitables.

3. Plaque d'acier pour lames de découpage à la presse en forme de bande selon la revendication 1 ou 2, dans laquelle l'épaisseur de la couche de surface décarburée est de 5 à 20 µm.

4. Plaque d'acier pour lames de découpage à la presse en forme de bande selon l'une quelconque des revendications 1 à 3, dans laquelle l'épaisseur de la plaque d'acier est de 0,4 à 1,5 mm.

5. Plaque d'acier pour lames de découpage à la presse en forme de bande selon l'une quelconque des revendications 1 à 4, dans laquelle
la partie de base a un carbure contenant du Nb ayant un diamètre de cercle équivalent de 1,0 µm ou plus à une densité existentielle de 10,0 grains ou plus par 900 µm², et une dureté contrôlée allant de 300 à 450 HV et
la densité existentielle du carbure contenant du Nb ayant un diamètre de cercle équivalent de 1,0 µm ou plus dans la région de couche de surface épaisse de 15 µm est de 0 à 5,0 grains par 900 µm².

6. Plaque d'acier pour lames de découpage à la presse en forme de bande selon l'une quelconque des revendications 1 à 5, dans laquelle la densité existentielle du carbure contenant du Nb dans la région de couche de surface épaisse de 15 µm est déterminée en observant au moins 5 régions rectangulaires ayant chacune un côté s'étendant de 15 µm dans la direction d'épaisseur de plaque et un côté d'au moins 60 µm perpendiculaire à celle-ci.

7. Lame de découpage à la presse en forme de bande ayant, au niveau de la partie d'extrémité latérale d'un matériau en forme de bande constitué de la plaque d'acier selon l'une quelconque des revendications 1 à 6, une partie affûtée ayant une forme effilée.

8. Lame de découpage à la presse en forme de bande ayant, au niveau de la partie d'extrémité latérale d'un matériau en forme de bande constitué de la plaque d'acier selon l'une quelconque des revendications 1 à 6, une partie affûtée ayant une forme effilée, et ayant, au niveau de la pointe de la partie affûtée, une partie de bord de lame trempée formée en trempant la structure de la partie de base pour avoir une dureté de 500 HV ou plus.
